# EUROPEAN PATENT SPECIFICATION

(11) **EP 2 227 091 B1**
(45) Date of publication and mention of the grant of the patent: **18.04.2012**
(21) Application number: 08839158.6
(22) Date of filing: 14.10.2008
(51) Int. Cl.: A23F 5/04, A23L 1/00, A23N 12/00

(54) **MACHINE AND PROCESS FOR ROASTING ALIMENTARY GRAINS**
MASCHINE UND VERFAHREN ZUM RÖSTEN VON NAHRUNGSMITTELKÖRNERN
MACHINE ET PROCÉDÉ POUR RÔTIR DES GRAINS ALIMENTAIRES

(30) Priority: 17.10.2007 IT MI20072002
(43) Date of publication of application: 15.09.2010
(73) Proprietor: Bratos S.r.l., 15057 Tortona (AL) (IT)
(72) Inventor: BAIADA, Carlo, I-41100 Modena (IT); SAVINI, Mario, I-26041 Casalmaggiore (IT); CAMATTI, Stefano, I-41056 Savignano Sul Panara (IT); ROSSI, Giampiero, I-27055 Rivanazzano (IT); BRAMBATI, Alessandro, I-27058 Voghera (IT)
(74) Representative: Rapisardi, Mariacristina
(86) International application number: PCT/EP2008/008682
(87) International publication number: WO 2009/049860

(56) References cited:
- EP-A- 0 534 051
- DE-A1- 2 306 430
- GB-A- 2 022 394
- JP-A- 6 209 749

## Description

The present invention refers to a machine and to a process for roasting alimentary grains, for example for roasting coffee, barley, cocoa, peanuts, etc.

As known, a conventional roaster has a cooling tank in which the freshly-roasted grains are cooled down through a forced circulation of cool air taken from the outside.

Conventional roaster has the drawback that the cooling of the coffee in the cooling tank is not always sufficiently quick to protect the coffee's aroma, which as known loses aroma when it interacts at a high temperature with the oxygen in the air.

As known, indeed, the chemical reactions that destroy the coffee's aroma are more active when the temperature is higher.

Moreover, the oxygen-richness of air makes the interaction even more dangerous. JP 06209749 discloses a method for cooling roasted coffee beans with nitrogen gas.

The technical task proposed of the present invention is, therefore, to make a machine and process for roasting alimentary grains that allow the aforementioned technical drawbacks of the prior art to be eliminated.

In this technical task, a purpose of the invention is to make a machine and process for roasting alimentary grains that keep the organoleptic properties of the grains intact at the end of roasting.

The technical task, as well as these and other purposes, according to the present invention, are accomplished by making a machine and process for roasting alimentary grains in accordance with the independent claims displayed hereafter.

Other characteristics of the present invention are defined, moreover, in the subsequent claims.

Further characteristics and advantages of the invention shall become clearer from the description of a preferred but not exclusive embodiment of the roasting machine and process according to the finding, illustrated for illustrating and not limiting purposes in the attached drawing, in which:

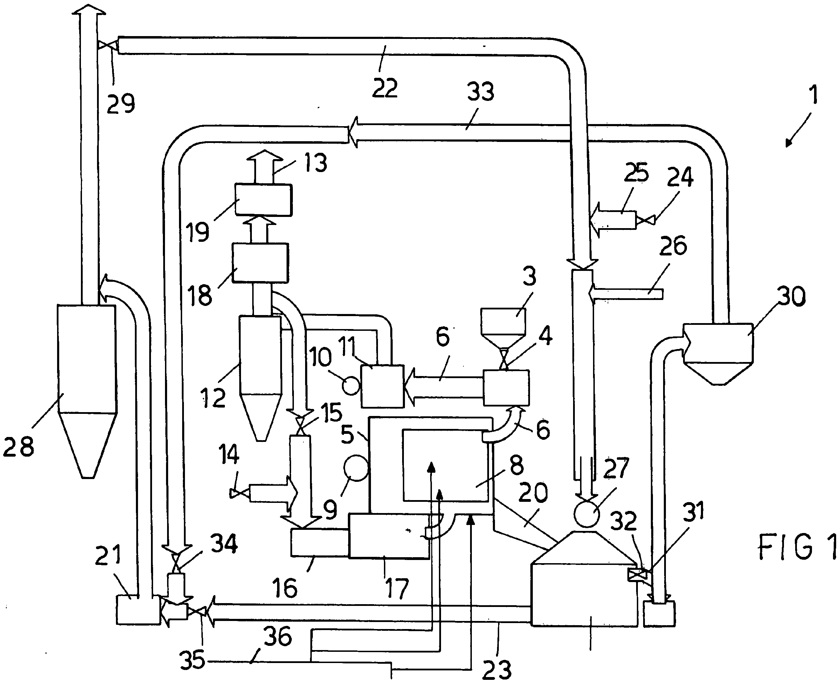

figure 1 shows a block diagram of a roasting machine in accordance with the invention.

The roasting machine comprises a roasting unit, a loading unit of the grains in the roasting chamber, a cooling unit of the roasted grains and a discharge unit of the roasted and cooled grains.

According to the roasting process of the present invention, after roasting in the roasting unit, the roasted grains are transferred into the tank 2 of the cooling unit that is fed with a flow of a cooling fluid into which a liquid agent with low saturated vapour pressure is injected, intended to absorb from the flow of cooling fluid at least the latent heat suitable for its own vaporization for the quick reduction in temperature of the flow of cooling fluid.

In order to optimize the process, the agent is injected in nebulised form into the flow of cooling fluid.

The agent is based upon an element or an inert chemical molecule or a mixture thereof, and in particular it does not contain oxygen.

Preferably, the agent is molecular nitrogen-based.

The cooling fluid is preferably fresh air.

Advantageously, at least part of the mixture consisting of the cooling fluid and the vaporized agent is recycled through the cooling tank 2 of the cooling unit.

The recycled part of such a mixture is added to further upstream of the cooling tank 2 with a top-up of the cooling fluid and agent in its liquid form in a set proportion.

More specifically, in the case in which the cooling fluid is fresh air and the agent is molecular nitrogen, the part of the gaseous mixture coming out from the cooling tank that is released into the atmosphere is replaced by an amount of fresh air and/or an amount of molecular nitrogen in liquid form in a set proportion, and the new mixture thus obtained is recycled into the cooling tank for cooling down the roasted grains.

The droplets of the nebulised agent, upon contact with the cooling fluid go into gaseous phase, absorbing heat from the cooling fluid (latent vaporization heat). In turn, the vaporized agent mixes with the cooling fluid going to the same temperature as the cooling fluid, heating up and subtracting heat from the cooling fluid.

The consequence of this heat exchange phenomenon is that the temperature of the cooling fluid on the roasted grains present in the cooling tank 2 is substantially below that of the fresh air that is normally used to form the cooling fluid. The reduction in temperature of the cooling fluid is all the greater, the greater the flow rate of the agent injected.

Thanks to the latent vaporization heat and the extremely low temperature of the vapour in equilibrium with the liquid, a fairly low flow rate of agent in liquid form is able to drastically decrease the temperature of the cooling fluid, significantly reducing the cooling time of the alimentary grains.

Moreover, in this way the cooling is carried out not by pure air at room temperature but rather by an air-based mixture having an oxygen concentration below that of pure air thanks to the presence in the mixture of the inert agent without oxygen. This circumstance advantageously contributes to slowing down the chemical reactions that dissipate the aromas, further improving the quality of the roasted product. The loading unit comprises a loading cyclone 3 in which the grains enter in suspension in a flow of transportation air that comes out from the cyclone after having deposited the grains.

A suitable butterfly valve 4, able to open when needed by the cycle, places the loading cyclone 3 in communication with the discharge duct 6 of the fumes of the roasting chamber 5 of the roasting unit.

Inside the roasting chamber 5 there is a rotary roasting basket that can be actuated by a gearmotor 9.

The roasting basket 8 is kept in rotation for the entire roasting cycle, to keep the grains suitably mixed and to make them interact with the hot process air, until the desired degree of roasting is achieved.

The hot roasting air inside the roasting chamber 5 is made to circulate by a suitable motorized fan 10 present in an intake chamber 11 of the hot roasting air. This fan 10 takes in hot air coming from the roasting chamber 5, where a temperature of 270-300°C is reached, and it is sized to suit the purpose. The fan 10, as well as removing the chaff that detaches from the roasted grains from the hot roasting air circuit, also ensures the hot roasting air recycling function in a closed cycle. If necessary along a hot roasting air circuit that foresees a cyclone 12 known as chaff peeling machine, the function of which is to separate the chaffs of the roasted grains from the hot roasting air, there is coffee that detaches during the course of roasting. Part of the hot roasting air is recycled in the process and part is discharged to the outside through a suitable chimney 13. The proportion between recovered and discharged hot roasting air and therefore the degree of heat recovery is adjustable through proportional motorized valves 14 and 15 present along the hot roasting air recycling circuit.

The part of hot roasting air that arrives from the fan 10 and that is expelled into the atmosphere is treated in a smoke-burning chamber 18 and in a catalyst 19 to get rid of the powders and roasting smoke contained in it.

The hot roasting air is generated by a burner 16 present in a combustion chamber 17 arranged upstream of the roasting chamber 5.

The hot roasting air inside the roasting chamber 5 has a path that extends around the roasting basket 8 to then be evacuated through the centre of the roasting basket 8 that is crossed parallel to its rotation axis.

The burner 16 takes care of heating the air to be sent to the roasting chamber 5, through the combustion of gas or another fuel. Suitable temperature and pressure probes (not shown) control its operation: a manostat controls the pressure inside the burner 16 (detachment of the flame) and a temperature probe controls the temperature in the combustion chamber 17.

The temperature of the roasting chamber 5 is controlled by a plurality of probes (not shown), one of which measures the temperature of the hot roasting air before it comes into contact with the grains, one measures the temperature of the grains, and one measures the temperature of the hot roasting air after it has come into contact with the grains.

The roasting chamber 5 is equipped with a door able to open upon command for access to a conveyor 20 suitable for conveying the roasted grains towards the cooling unit for cooling down immediately after roasting. The roasted grains come out through the conveyor 20 by gravity and by the action of the blades of an agitator (not shown) of the grains present in the roasting basket 8.

The cooling unit of the roasted grains comprises the cooling tank 2, a fan 21 for the circulation of the cooling fluid, a feed line 22 of the cooling fluid to the cooling tank 2, located between the delivery of the fan 21 and the inlet of the cooling tank 2, and a recycling line 23 of the cooling fluid, located between the outlet of the cooling tank 2 and the intake of the fan 21 to which it is connected through a valve 35.

A fresh air injection line 25, as well as a refrigerant agent injection line 26 equipped with nebuliser, are connected to the feed line 22, through a valve 24.

Preferably, there is an auxiliary fan 27 going into the cooling tank 2.

Along the feed line 22 there is also a separation cyclone 28 in which the powder residue is separated from the cooling fluid coming from the cooling tank 2, and a valve 29 that divides the flow of cooling fluid coming from the separation cyclone 28 into a part to be discharged through a chimney and a part to be taken back to the cooling tank 2.

The discharge unit comprises a destoner 30 (a cyclone that eliminates possible stones or pieces of metal present in the roasted grains, to avoid damage to the grinding mills) connected to the cooling tank 2 through a connection duct 31 equipped with an opening valve 32 able to be opened at the end of the cooling cycle.

The destoner 30 has a line 33 for returning the cooling fluid connected through an intake valve 34 of the fan 21.

The machine 1 preferably also has a known cooling and fire-prevention system for the roasting chamber 5 and the cooling tank 2.

Such a system consists of a pressurized water line 36 that can be injected into the cooling tank 2 and/or into the roasting chamber 5 to put out the grains or chaffs that have caught fire, to quickly cool down the hot roasting air and to polish the grains and increase their weight.

Similarly, a known fire-prevention system is foreseen for the chaff peeling machine 12.

The valve 35 controls the discharge of the grains from the cooling chamber 2 to the destoner 30.

When the cooling function is active the valve 34 is closed and the valve 35 is open and the cooling fluid moved by the fan 21 (and by the auxiliary fan 27) flows along the feed line 22, enters into the cooling tank 2 from which it comes out going into the recycling circuit 23. The function of the fan 21 (and of the auxiliary fan 27) is therefore to circulate the cooling fluid through the cooling tank 2.

When, on the other hand, the discharge function of the grains is active the valve 34 is open and the valve 35 is closed and the cooling fluid flows along the feed line 22, enters into the cooling tank 2 from which it comes out going into the duct 31 to head towards the destoner 30 from which it comes out going into the return line 33 to be taken back to the intake of the fan 21 through the valve 34. The function of the fan 21 (and of the auxiliary fan 27) is therefore to circulate the cooling fluid using it as transfer vector of the cooled roasted grains from the cooling tank 2 to the destoner 30.

As stated in the description, the quick cooling of the grains in the cooling tank 2 constitutes an essential requirement, to protect the aroma of the grains that lose aroma when they interact at high temperature with the oxygen in air.

The injection upstream of the cooling tank of a liquid agent with low saturated vapour pressure in nebulised form into the cooling fluid allows the latent heat to be absorbed from the cooling fluid by its own vaporization and, moreover, it mixes with the cooling fluid absorbing further heat to go into thermal equilibrium with it.

The consequence of this heat exchange phenomenon is that the temperature of the cooling fluid is reduced, and at a quicker rate, in proportion to the percentage of refrigerant agent present in the mixture.

Moreover, since the mixture that carries out the cooling is increasingly less oxygen-rich compared to the normal percentage of oxygen contained in air, the chemical reactions the dissipate the aromas are slowed down, further improving the quality of the product.

Again to progressively decrease the presence of oxygen in the cooling fluid, the mixture coming out from the cooling tank is circulated to be added to with a further amount of refrigerant agent before the subsequent entry into the cooling tank.

The process and machine for roasting alimentary grains thus conceived can undergo numerous modifications and variants, all of which are covered by the inventive concept; moreover, all of the details can be replaced by technically equivalent elements.

In practice, the materials used, as well as the sizes, can be whatever according to requirements and the state of the art.

## Claims

1. Process for roasting alimentary grains, **characterised in that** the grains are roasted in a roasting unit and then transferred into a cooling unit that is fed with a flow of cooling fluid into which, before interaction with the grains, a liquid agent with low saturated vapour pressure is injected, intended to absorb from said flow of cooling fluid at least the latent heat suitable for its own vaporization for the quick reduction in temperature of said flow of cooling fluid.

2. Process for roasting alimentary grains according to claim 1, **characterised in that** said liquid agent is injected in nebulised form into said flow of cooling fluid.

3. Process for roasting alimentary grains according to one or more of the previous claims, **characterised in that** said liquid agent is based upon an inert chemical molecule or an element or a mixture thereof.

4. Process for roasting alimentary grains according to one or more of the previous claims, **characterised in that** said liquid agent does not contain oxygen.

5. Process for roasting alimentary grains according to one or more of the previous claims, **characterised in that** said liquid agent is nitrogen-based.

6. Process for roasting alimentary grains according to one or more of the previous claims, **characterised in that** said cooling fluid is fresh air.

7. Process for roasting alimentary grains according to one or more of the previous claims, **characterised in that** said at least part of the mixture of said cooling fluid with said vaporised agent is recycled to interact once again with said alimentary grains.

8. Process for roasting alimentary grains according to one or more of the previous claims, **characterised in that** the recycled part of said mixture is further added to, before interaction with said grains, with a top-up of said cooling fluid and of said liquid agent in a predetermined proportion.

9. Roasting machine for roasting alimentary grains of the type having a roasting unit and a unit for cooling the roasted grains in turn comprising a cooling tank and a feed line of a cooling fluid to said cooling tank, **characterised in that** it has an injection line into said feed line of a liquid agent with low saturated vapour pressure, intended to absorb from said flow of cooling fluid at least the latent heat suitable for its own vaporization for the quick reduction in temperature of said flow of cooling fluid.

10. Machine for roasting alimentary grains according to claim 1, **characterised in that** said injection line comprises a nebuliser for the injection of said agent in nebulised form into said flow of cooling fluid.

11. Machine for roasting alimentary grains according to one or more of the previous claims, **characterised in that** it has a recycling line to recycle, through said cooling tank, at least part of the gaseous mixture coming out from said cooling tank.

## Patentansprüche

1. Verfahren zum Rösten von Nahrungsmittelkörnern, **dadurch gekennzeichnet, dass** die Körner in einer Rösteinheit geröstet und anschließend in eine Kühleinheit weitergeleitet werden, die mittels eines Kühlfluidstroms gespeist wird, in den vor der Wechselwirkung mit den Körnern ein flüssiger Wirkstoff mit niedriggesättigtem Dampfdruck eingespritzt wird, um aus dem genannten Kühlfluidstrom zumindest die latente Hitze zu absorbieren, geeignet zur eigenen Verdampfung zur schnellen Temperatursenkung des genannten Kühlfluidstroms.

2. Verfahren zum Rösten von Nahrungsmittelkörnern nach Anspruch 1, **dadurch gekennzeichnet, dass** der genannte flüssige Wirkstoff in zerstäubter Form in den genannten Kühlfluidstrom eingespritzt wird.

3. Verfahren zum Rösten von Nahrungsmittelkörnern nach einem oder mehreren der vorhergehenden Ansprüche, **dadurch gekennzeichnet, dass** der genannte flüssige Wirkstoff auf einem inerten chemischen Molekül oder einem Element oder einer Mischung davon basiert.

4. Verfahren zum Rösten von Nahrungsmittelkörnern nach einem oder mehreren der vorhergehenden Ansprüche, **dadurch gekennzeichnet, dass** der genannte flüssige Wirkstoff keinen Sauerstoff enthält.

5. Verfahren zum Rösten von Nahrungsmittelkörnern nach einem oder mehreren der vorhergehenden Ansprüche, **dadurch gekennzeichnet, dass** der genannte flüssige Wirkstoff stickstoffbasiert ist.

6. Verfahren zum Rösten von Nahrungsmittelkörnern nach einem oder mehreren der vorhergehenden Ansprüche, **dadurch gekennzeichnet, dass** das genannte Kühlfluid Frischluft ist.

7. Verfahren zum Rösten von Nahrungsmittelkörnern nach einem oder mehreren der vorhergehenden Ansprüche, **dadurch gekennzeichnet, dass** dieser genannte mindestens eine Teil der Mischung des genannten Kühlfluids mit dem genannten verdampften Wirkstoff rückgewonnen wird, um erneut mit den genannten Nahrungsmittelkörnern zu interagieren.

8. Verfahren zum Rösten von Nahrungsmittelkörnern nach einem oder mehreren der vorhergehenden Ansprüche, **dadurch gekennzeichnet, dass** dem rückgewonnenen Teil der genannten Mischung vor der Wechselwirkung mit den genannten Körnern eine Nachfüllung des genannten Kühlfluids und des genannten flüssigen Wirkstoffs in einem vorgegebenen Verhältnis hinzugefügt wird.

9. Verfahren zum Rösten von Nahrungsmittelkörnern, vom Typ besitzend eine Rösteinheit und eine Einheit zum Kühlen der gerösteten Körner, die wiederum einen Kühlbehälter und eine Zuführungsleitung eines Kühlfluids zu genanntem Kühlbehälter umfasst, **dadurch gekennzeichnet, dass** es eine Einspritzleitung in der genannten Zuführungsleitung eines flüssigen Wirkstoffs mit niedriggesättigtem Dampfdruck besitzt, um aus dem genannten Kühlfluidstrom mindestens die latente Hitze zu absorbieren, geeignet zur eigenen Verdampfung für die schnelle Temperatursenkung des genannten Kühlfluidstroms.

10. Maschine zum Rösten von Nahrungsmittelkörnern nach Anspruch 1, **dadurch gekennzeichnet, dass** die genannte Einspritzleitung einen Zerstäuber für das Einspritzen des genannten Wirkstoffs in zerstäubter Form in den genannten Kühlfluidstrom umfasst.

11. Maschine zum Rösten von Nahrungsmittelkörnern nach einem oder mehreren der vorhergehenden Ansprüche, **dadurch gekennzeichnet, dass** sie eine Rückgewinnungsleitung umfasst, um durch den genannten Kühlbehälter mindestens einen Teil der gasförmigen Mischung, die aus dem genannten Kühlbehälter ausströmt, rückzugewinnen.

## Revendications

1. Procédé pour rôtir des grains alimentaires, **caractérisé en ce que** les grains sont rôtis dans une unité de rôtissage, puis transférés dans une unité de refroidissement alimentée par un écoulement de liquide de refroidissement dans lequel est injecté, avant l'interaction avec les grains, un agent liquide avec une pression de vapeur saturée basse, afin d'absorber dudit écoulement de liquide de refroidissement, au moins la chaleur latente pouvant, en raison de sa propre vaporisation, diminuer rapidement la température dudit écoulement de liquide de refroidissement.

2. Procédé pour rôtir des grains alimentaires selon la revendication 1, **caractérisé en ce que** ledit agent liquide est injecté sous forme nébulisée dans ledit écoulement de liquide de refroidissement.

3. Procédé pour rôtir des grains alimentaires selon l'une ou plusieurs des revendications précédentes, **caractérisé en ce que** ledit agent liquide se base sur une molécule chimique inerte ou un élément ou un mélange de celui-ci.

4. Procédé pour rôtir des grains alimentaires selon l'une ou plusieurs des revendications précédentes, **caractérisé en ce que** ledit agent liquide ne contient pas d'oxygène.

5. Procédé pour rôtir des grains alimentaires selon l'une ou plusieurs des revendications précédentes, **caractérisé en ce que** ledit agent liquide est à base d'azote.

6. Procédé pour rôtir des grains alimentaires selon l'une ou plusieurs des revendications précédentes, **caractérisé en ce que** ledit liquide de refroidissement est de l'air frais.

7. Procédé pour rôtir des grains alimentaires selon l'une ou plusieurs des revendications précédentes, **caractérisé en ce que** ladite au moins une partie du mélange dudit liquide de refroidissement avec ledit agent vaporisé est recyclée pour interagir encore une fois avec lesdits grains alimentaires.

8. Procédé pour rôtir des grains alimentaires selon l'une ou plusieurs des revendications précédentes, **caractérisé en ce que** la partie recyclée dudit mélange est également additionnée, avant l'interaction avec lesdits grains, d'un appoint dudit liquide de refroidissement et dudit agent liquide dans une proportion prédéterminée.

9. Machine pour rôtir des grains alimentaires du type avec une unité de rôtissage et une unité de refroidissement des grains rôtis comprenant, à son tour, un réservoir de refroidissement et un circuit d'alimentation d'un liquide de refroidissement audit réservoir de refroidissement, **caractérisée en ce qu'**elle présente un circuit d'injection dans ledit circuit d'alimentation d'un agent liquide avec une pression de vapeur saturée basse, afin d'absorber dudit écoulement de liquide de refroidissement, au moins la chaleur latente pouvant, en raison de sa propre vaporisation, diminuer rapidement la température dudit écoulement de liquide de refroidissement.

10. Machine pour rôtir des grains alimentaires selon la revendication 1, **caractérisée en ce que** ledit circuit d'injection comprend un nébuliseur pour l'injection dudit agent sous forme nébulisée dans ledit écoulement de liquide de refroidissement.

11. Machine pour rôtir des grains alimentaires selon l'une ou plusieurs des revendications précédentes, **caractérisée en ce qu'**elle présente un circuit de recyclage pour recycler, via ledit réservoir de refroidissement, au moins une partie du mélange gazeux provenant dudit réservoir de refroidissement.
